# FASCICULE DE BREVET EUROPEEN

(11) **EP 2 580 122 B1**
(45) Date de publication et mention de la délivrance du brevet: **06.04.2016**
(21) Numéro de dépôt: 11728355.6
(22) Date de dépôt: 06.06.2011
(51) Int. Cl.: B64D 41/00, H02J 1/10, H02J 3/00

(54) **CIRCUIT D'ALIMENTATION ELECTRIQUE POUR UN CIRCUIT DE DEGIVRAGE D'UN AERONEF**
SYSTEM FÜR DIE STROMVERSORGUNG EINER FLUGZEUGENTEISUNGSANLAGE
ELECTRIC FEED SYSTEM FOR AIRCRAFT DE-ICING SYSTEM

(30) Priorité: 11.06.2010 FR 1054627
(43) Date de publication de la demande: 17.04.2013
(73) Titulaire: Labinal Power Systems, 31700 Blagnac (FR)
(72) Inventeur: BADER, Nicolas, Alain, F-77000 Vaux Le Penil (FR); BOUDYAF, Rachid, F-94140 Alfortville (FR); PATOUILLARD, Alexis, F-91230 Montgeron (FR); PIERRON, Sébastien, Daniel, F-92160 Antony (FR)
(74) Mandataire: Delumeau, François Guy
(86) Numéro de dépôt international: PCT/FR2011/051270
(87) Numéro de publication internationale: WO 2011/154645

(56) Documents cités:
- EP-A1- 1 953 085
- WO-A2-2004/037641
- FR-A1- 2 911 847
- US-A- 3 657 514
- US-A- 5 899 411
- US-B1- 6 992 403

## Description

### Arrière-plan de l'invention

L'invention concerne l'alimentation en énergie électrique pour des équipements électriques d'un moteur d'aéronef et/ou de son environnement.

Le domaine d'application de l'invention est plus particulièrement celui des moteurs d'avion, notamment des moteurs à turbine à gaz.

Par équipements électriques d'un moteur d'aéronef ou de son environnement, on entend ici non seulement des équipements électriques utiles pour le fonctionnement même du moteur, mais aussi des équipements électriques associés à la nacelle du moteur, tels que par exemple des circuits électriques de dégivrage ou d'antigivrage (NAI pour "Nacelle Anti Icing") ou des actionneurs d'ouverture des capots de renverse (TRCOS pour "Thrust Reverse Cowl Opening System") ou des actionneurs électromécaniques d'inverseurs de poussée (ETRAC pour "Electrical Thrust Reverse Actuation Control") pour un moteur d'avion à turbine à gaz, voire même associés à la voilure portant le moteur, tels que par exemple des circuits électriques de dégivrage ou d'antigivrage de voilure d'avion.

Le document FR 2 911 848 décrit une architecture dans laquelle un circuit d'alimentation et de commande comprend deux générateurs montés sur un boîtier de transmission couplé mécaniquement à un arbre de turbine du moteur d'un aéronef. Ces générateurs sont typiquement des démarreurs/générateurs, ou S/G (pour "Starter/Generator") comprenant une génératrice synchrone qui est associée à une excitatrice et qui fournit une tension alternative à fréquence variable en fonction du régime du moteur, l'ensemble excitatrice et génératrice synchrone étant commandé pour fonctionner en mode moteur synchrone au démarrage de la turbine. La tension alternative fournie par les S/G est acheminée vers un réseau électrique de distribution d'énergie électrique à bord de l'avion, ou réseau électrique de bord d'avion. Un circuit du réseau de bord d'avion fournit sur un ou plusieurs bus de distribution une tension alternative régulée, typiquement de 115 Vac ou 230 Vac, ayant une fréquence variable en fonction de la vitesse de rotation de l'arbre de turbine. Ce circuit alimente également un circuit convertisseur de tension qui fournit une tension continue régulée, typiquement 270 Vdc ou +/- 270 Vdc, sur un ou plusieurs bus. Les tensions produites alimentent différentes charges dans la zone de fuselage de l'avion.

Par ailleurs, plusieurs équipements électriques situés dans le moteur de l'aéronef ou dans son environnement sont alimentés par un bus d'alimentation en tension continue, lui-même alimenté par des convertisseurs de tension reliés à la tension alternative du réseau de bord d'avion. Ces équipements électriques peuvent comprendre un actionneur électromécanique d'inverseurs de poussée.

D'autre part, le circuit d'alimentation comporte également un générateur d'alimentation intégré au moteur de l'aéronef pour alimenter un circuit de dégivrage ou d'antigivrage de la nacelle du moteur ou un circuit de dégivrage d'une voilure portant le moteur. Ceci permet de limiter la longueur du câble acheminant l'énergie électrique vers le circuit de dégivrage, et donc de réduire la masse et l'encombrement des câbles nécessaires pour acheminer l'énergie électrique vers les charges externes au fuselage.

Malgré les avantages de cette architecture, les convertisseurs de tension qui alimentent les équipements électriques dans la zone moteur doivent être dimensionnés en tenant compte de la puissance nécessaire pour tous les équipements, ce qui peut représenter une masse et un encombrement importants. De plus, ces convertisseurs de tension étant reliés au réseau de bord d'avion, ils doivent vérifier des contraintes en termes de limite harmonique à ne pas dépasser et d'appel de courant. Ainsi, ces convertisseurs présentent une structure complexe.

### Objet et résumé de l'invention

L'invention vise à fournir un circuit d'alimentation en énergie électrique pour aéronef, qui ne présente pas les inconvénients de l'art antérieur précité.

A cet effet, l'invention propose un circuit d'alimentation en énergie électrique pour un aéronef, comprenant un réseau de distribution d'énergie électrique à bord de l'aéronef pour des équipements électriques situés dans un moteur de l'aéronef ou dans l'environnement dudit moteur, un générateur d'alimentation intégré au moteur de l'aéronef pour alimenter en tension alternative un circuit de dégivrage ou d'antigivrage, caractérisé en ce que le générateur d'alimentation est relié à un actionneur électromécanique d'inverseur de poussée par l'intermédiaire d'un redresseur pour alimenter ledit actionneur en tension continue.

Grâce à ces caractéristiques, l'actionneur électromécanique d'inverseur de poussée peut être alimenté à partir du même générateur d'alimentation que le circuit de dégivrage ou d'antigivrage, par l'intermédiaire du redresseur. Il n'est donc pas nécessaire de prévoir un convertisseur de tension destiné à alimenter l'actionneur à partir du réseau de distribution pendant son fonctionnement opérationnel. Par ailleurs, le redresseur n'étant pas relié au réseau de distribution, il peut être conçu de manière très simple, avec une masse et un encombrement réduits et sans nécessiter de vérifier des contraintes en termes de limite harmonique ou d'appel de courant.

Par exemple, ledit redresseur est un pont de diodes.

Dans ce cas, le redresseur présente une structure particulièrement simple, peu massive et peu encombrante. De plus, il peut présenter des pertes thermiques peu élevées.

Selon un mode de réalisation, ledit réseau est relié audit actionneur par l'intermédiaire d'un deuxième redresseur.

Ce deuxième redresseur permet d'alimenter l'actionneur d'inverseurs de poussée pendant la maintenance. Il peut être dimensionné pour une puissance plus faible.

Selon un mode de réalisation, un module de régulation électronique moteur est apte à réguler la tension alternative fournie par le générateur d'alimentation et à commander la fermeture d'un commutateur situé entre le générateur d'alimentation et ledit actionneur lorsque ladite tension alternative atteint un niveau prédéterminé.

Selon une variante, le module de régulation électronique moteur est apte à commander un commutateur situé entre le générateur d'alimentation et le circuit de dégivrage ou d'antigivrage.

Selon une autre variante, le module de régulation électronique moteur est apte à commander le circuit de dégivrage ou d'antigivrage pour fonctionner à puissance réduite.

Le réseau de distribution d'énergie électrique à bord de l'aéronef peut alimenter lesdits équipements électriques par l'intermédiaire de convertisseurs de tension.

L'invention fournit également un aéronef comprenant un circuit d'alimentation en énergie électrique selon l'invention ci-dessus.

### Brève description des dessins

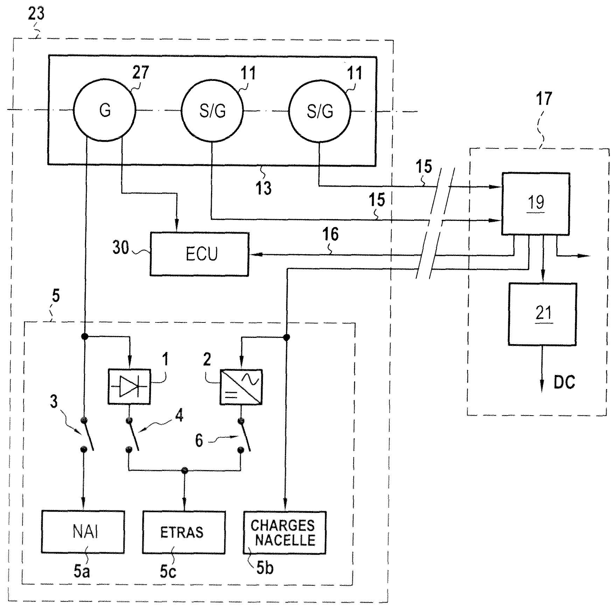

L'invention sera mieux comprise à la lecture de la description faite ci-après, à titre indicatif mais non limitatif, en référence au dessin annexé, sur lequel la figure 1 est une vue très schématique d'un système pour l'alimentation électrique et la commande d'équipements d'un moteur d'aéronef et de son environnement.

### Description détaillée de modes de réalisation

La figure 1 montre un schéma d'un circuit pour l'alimentation électrique et la commande d'un ensemble 5 comprenant des équipements électriques d'un moteur d'aéronef et de son environnement, notamment un moteur d'avion à turbine à gaz.

L'ensemble 5 comprend un circuit de dégivrage ou d'antigivrage 5a (NAI pour "Nacelle Anti Icing") d'une nacelle du moteur ou un circuit de dégivrage d'une voilure portant le moteur, un actionneur 5c électromécanique d'inverseur(s) de poussée (ETRAS pour "Electrical Thrust Reverse Actuation System"), et plusieurs autres équipement électriques 5b utiles pour le fonctionnement du moteur et de son environnement.

Le circuit de la figure 1 comporte au moins un générateur 11, tel qu'un S/G monté sur un boîtier de transmission (schématisé par 13) couplé mécaniquement à un arbre de turbine du moteur (non représenté). La tension alternative fournie par le ou les générateurs S/G 11 est acheminée par une ou des lignes 15 à un réseau électrique 17 de distribution d'énergie électrique à bord de l'avion, ou réseau électrique de bord d'avion. Un circuit 19 du réseau de bord d'avion fournit sur un ou plusieurs bus de distribution une tension alternative régulée, typiquement 115 Vac ou 230 Vac, ayant une fréquence variable en fonction de la vitesse de rotation de l'arbre de turbine. Le circuit 19 peut alimenter également un circuit convertisseur de tension 21 qui fournit une tension continue régulée, typiquement 270 Vdc ou +/- 270 Vdc, sur un ou plusieurs bus. Les tensions produites par les circuits 19 et 21 alimentent différentes charges dans la zone de fuselage de l'avion.

Le circuit d'alimentation comporte également, au niveau du moteur (schématisé par 23), un générateur d'alimentation 27 intégré au moteur de l'aéronef et fournissant une tension alternative.

Le générateur d'alimentation 27 alimente le circuit de dégivrage 5a. Le circuit de dégivrage 5a étant purement résistif, il peut être relié au générateur d'alimentation 27 pour recevoir la tension alternative, sans convertisseur de tension intermédiaire. Un commutateur 3 peut être situé entre le générateur d'alimentation 27 et le circuit de dégivrage 5a.

Les équipements électriques 5b sont alimentés à partir du circuit 19, par l'intermédiaire de convertisseurs de tension (non représentés). Ces convertisseurs de tension étant reliés au réseau électrique 17, ils vérifient des conditions en termes de limite harmonique et d'appel de courant.

Enfin, l'actionneur 5c est relié à un redresseur 1 alimenté par le générateur d'alimentation 27 et à un redresseur 2 alimenté à partir du circuit 19. Des commutateurs 4 et 6 permettent de connecter l'actionneur 5c aux redresseurs 1 ou 2.

Par ailleurs, le circuit de la figure 1 comprend au moins un module de régulation du moteur 30, ou ECU. L'ECU 30 est relié au générateur d'alimentation 27, qui peut fournir à l'ECU 30 une énergie électrique alternative. Par ailleurs, l'ECU 30 est aussi relié au circuit 19 de tension alternative par une ligne 16 pour pouvoir être alimenté correctement tant qu'un régime moteur suffisant n'a pas été atteint pour assurer la fourniture de l'énergie électrique requise par le générateur d'alimentation 27. L'ECU 30 est capable de réguler la tension fournie par le générateur 27. L'ECU 30 est également capable de commander les commutateurs 3, 4 et 6.

Le fonctionnement du circuit de la figure 1 est le suivant.

En vol, dans des conditions givrantes, l'ECU 30 commande la fermeture du commutateur 3 et le générateur d'alimentation 27 fournit la puissance au circuit de dégivrage 5a. Typiquement, la puissance nécessaire au circuit de dégivrage 5a peut être de l'ordre de 35 kW. Le générateur d'alimentation 27 est dimensionné de manière correspondante.

Par ailleurs, en vol, l'inversion de poussée est inhibée par l'ECU 30 qui commande les commutateurs 4 et 6 en position ouverte. L'actionneur 5c n'est donc pas alimenté. De plus, pour multiplier les moyens d'action visant à inhiber l'inversion de poussée, l'ECU 30 peut commander un verrouillage des inverseurs de poussée et envoyer un ordre de rangement à l'actionneur 5c.

Au sol, pour activer l'inversion de poussée, l'ECU 30 commande l'ouverture du commutateur 3 et régule la tension fournie par le générateur d'alimentation 27 à un niveau approprié pour l'actionneur 5c. Quand ce niveau de tension est atteint, l'ECU 30 commande la fermeture du commutateur 4. L'actionneur 5c est alors alimenté par le générateur d'alimentation 27, par l'intermédiaire du redresseur 1. Typiquement, la puissance nécessaire à l'actionneur 5c peut être de l'ordre de 10 kW. Le générateur d'alimentation 27 est donc capable de fournir la puissance nécessaire.

Comme le redresseur 1 n'est pas relié au réseau électrique 17, il ne doit pas vérifier de conditions particulières en termes de limite harmonique ou d'appel de courant. Le redresseur 1 peut donc être conçu de manière très simple, avec une masse et un encombrement réduits. Grâce à cette structure très simple, le redresseur 1 peut présenter des pertes thermiques limitées. Par exemple, le redresseur 1 est un pont de diodes.

La constante thermique du circuit de dégivrage 5a étant relativement longue, il n'est pas gênant de ne pas l'alimenter temporairement, pendant le fonctionnement de l'actionneur 5c, en ouvrant le commutateur 3. Dans une variante, le commutateur 3 reste fermé et l'ECU 30 commande le circuit de dégivrage 5a pour fonctionner selon une puissance limitée. Dans ce cas, une partie de la puissance fournie par le générateur d'alimentation 27 peut être utilisée par l'actionneur 5c.

Enfin, pendant une opération de maintenance, lorsque l'aéronef est au sol, le moteur ne tourne pas. Le générateur d'alimentation 27 n'est donc pas entraîné en rotation et ne fournit pas de tension électrique. Le réseau électrique 17 peut être alimenté par un groupe de parc ou par une unité de puissance auxiliaire (APU pour « Auxiliary Power Unit »). L'ECU peut commander la fermeture du commutateur 6, ce qui permet d'alimenter l'actionneur 5c à partir du réseau électrique 17, par l'intermédiaire du redresseur 2.

Le redresseur 2 peut être dimensionné uniquement pour la puissance nécessaire à l'actionneur 5c pendant une phase de maintenance, c'est-à-dire lorsque la vitesse de rotation du moteur et les forces aérodynamiques sont nulles. Cette puissance est plus faible que la puissance nécessaire à l'actionneur 5c lors de son fonctionnement opérationnel, lorsqu'il est alimenté par le générateur d'alimentation 27. Le redresseur 2, dimensionné pour cette puissance plus faible, peut donc présenter une masse et un encombrement réduits.

Dans une variante non représenté, un sectionneur manuel situé en amont du redresseur 2 peut être ouvert pour éviter une ouverture intempestive des inverseurs de poussée pendant la maintenance.

## Revendications

1. Aéronef incluant un moteur d'aéronef et un circuit d'alimentation en énergie électrique, ledit circuit d'alimentation comprenant un réseau (17) de distribution d'énergie électrique à bord de l'aéronef relié à des équipements électriques (5b) situés dans le moteur de l'aéronef ou dans l'environnement dudit moteur, et un générateur d'alimentation (27) intégré au moteur de l'aéronef et relié à un circuit de dégivrage ou d'antigivrage (5a) pour alimenter en tension alternative ledit circuit de dégivrage ou d'antigivrage (5a), **caractérisé en ce que** le générateur d'alimentation (27) est relié à un actionneur (5c) électromécanique d'inverseur de poussée par l'intermédiaire d'un redresseur (1) pour alimenter ledit actionneur en tension continue.

2. Aéronef selon la revendication 1, dans lequel ledit redresseur (1) est un pont de diodes.

3. Aéronef selon l'une des revendications 1 et 2, dans lequel ledit réseau (17) est relié audit actionneur (5c) par l'intermédiaire d'un deuxième redresseur (2).

4. Aéronef selon l'une des revendications 1 à 3, dans lequel un module de régulation électronique moteur (30) est configuré pour réguler la tension alternative fournie par le générateur d'alimentation (27) et pour commander la fermeture d'un commutateur (4) situé entre le générateur d'alimentation et ledit actionneur (5c) lorsque ladite tension alternative atteint un niveau prédéterminé.

5. Aéronef selon la revendication 4, dans lequel le module de régulation électronique moteur (30) est configuré pour commander un commutateur (3) situé entre le générateur d'alimentation et le circuit de dégivrage ou d'antigivrage.

6. Aéronef selon la revendication 4, dans lequel le module de régulation électronique moteur (30) est configuré pour commander le circuit de dégivrage ou d'antigivrage pour fonctionner à puissance réduite.

7. Aéronef selon l'une des revendications 1 à 6, dans lequel ledit réseau (17) de distribution d'énergie électrique à bord de l'aéronef alimente lesdits équipements électriques (5b) par l'intermédiaire de convertisseurs de tension.

## Patentansprüche

1. Flugzeug mit einem Flugzeugtriebwerk und einem Kreis zur Versorgung mit elektrischer Energie, wobei der Versorgungskreis ein Netz (17) zur Verteilung von elektrischer Energie an Bord des Flugzeugs, das mit in dem Triebwerk des Flugzeugs oder in der Umgebung des Triebwerks befindlichen elektrischen Einrichtungen (5b) verbunden ist, sowie einen Versorgungsgenerator (27) umfasst, der in das Triebwerk des Flugzeugs integriert und mit einem Enteisungs- oder Vereisungsschutzkreis (5a) verbunden ist, um den Enteisungs- oder Vereisungsschutzkreis (5a) mit Wechselspannung zu versorgen, **dadurch gekennzeichnet, dass** der Versorgungsgenerator (27) mit einem elektromechanischen Schubumkehraktor (5c) über einen Gleichrichter (1) verbunden ist, um den Aktor mit Gleichspannung zu versorgen.

2. Flugzeug nach Anspruch 1, wobei der Gleichrichter (1) eine Diodenbrücke ist.

3. Flugzeug nach einem der Ansprüche 1 und 2, wobei das Netz (17) mit dem Aktor (5c) über einen zweiten Gleichrichter (2) verbunden ist.

4. Flugzeug nach einem der Ansprüche 1 bis 3, wobei ein elektronisches Triebwerksregelungsmodul (30) dazu ausgelegt ist, die durch den Versorgungsgenerator (27) gelieferte Wechselspannung zu regeln und das Schließen eines zwischen dem Versorgungsgenerator und dem Aktor (5c) befindlichen Schalters (4) zu steuern, wenn die Wechselspannung ein vorbestimmtes Niveau erreicht.

5. Flugzeug nach Anspruch 4, wobei das elektronische Triebwerksregelungsmodul (30) dazu ausgelegt ist, einen zwischen dem Versorgungsgenerator und dem Enteisungs- oder Vereisungsschutzkreis befindlichen Schalter (3) zu steuern.

6. Flugzeug nach Anspruch 4, wobei das elektronische Triebwerksregelungsmodul (30) dazu ausgelegt ist, den Enteisungs- oder Vereisungsschutzkreis zu steuern, um mit verminderter Leistung zu arbeiten.

7. Flugzeug nach einem der Ansprüche 1 bis 6, wobei das Netz (17) zur Verteilung von elektrischer Energie an Bord des Flugzeugs die elektrischen Einrichtungen (5b) mittels Spannungswandlern speist.

## Claims

1. An aircraft having an aircraft engine and an electrical power supply circuit, said electrical power supply circuit including an electrical power distribution network (17), onboard the aircraft, for electrical devices (5b) located in an engine of the aircraft or in the environment of said engine, and a power supply generator (27) integrated into the engine of the aircraft and connected to a deicing or anti-icing system (5a) so as to supply AC voltage power to said deicing or anti-icing system (5a), **characterized in that** the power supply generator (27) is connected to a thrust reverser electromechanical actuator (5c) through a rectifier (1) for supplying DC voltage power to said actuator.

2. The aircraft according to claim 1, wherein said rectifier (1) is a diode bridge.

3. The aircraft according to one of claims 1 and 2, wherein said network (17) is connected to said actuator (5c) through a second rectifier (2).

4. The aircraft according to one of claims 1 to 3, wherein an electronic engine control unit (30) is designed for regulating the AC voltage supplied by the power generator (27) and for controlling the closure of a switch (4) located between the power generator and said actuator (5c) when said AC voltage reaches a predetermined level.

5. The aircraft according to claim 4, wherein the electronic engine control unit (30) is designed for controlling a switch (3) located between the power generator and the deicing or anti-icing circuit.

6. The aircraft according to claim 4, wherein the electronic engine control unit (30) is designed for controlling the deicing or anti-icing circuit to operate with reduced power.

7. The aircraft according to one of claims 1 to 6, wherein said electrical power distribution network (17) onboard the aircraft powers said electrical devices (5b) through voltage converters.
